**Europäisches Patentamt**

**European Patent Office**

**Office européen des brevets**

(19)

(11) Veröffentlichungsnummer: **0 037 847**
**A2**

(12) **EUROPÄISCHE PATENTANMELDUNG**

(21) Anmeldenummer: **80103315.0**

(22) Anmeldetag: **13.06.80**

(51) Int. Cl.³: **F 24 D  3/00,** F 24 D  3/10,
F 24 H  1/18

(30) Priorität: **10.04.80  DE 3013877**
**14.05.80  DE 3018374**

(43) Veröffentlichungstag der Anmeldung: **21.10.81**
**Patentblatt 81/42**

(84) Benannte Vertragsstaaten: **AT BE CH DE FR GB LI LU**
**NL SE**

(71) Anmelder: **Hertel, Wilhelm, Rosenweg 9,**
**D-6149 Rimbach (DE)**

(72) Erfinder: **Hertel, Wilhelm, Dipl.-Ing., Rosenweg 9,**
**D-6149 Rimbach (DE)**
Erfinder: **Hertel, Winfried, Kirschgartenstrasse 39,**
**D-6501 Essenheim (DE)**

(54) **Stehender, zylindrischer Flüssigkeitswärmespeicher mit aufgesetztem, offenen Ausdehnungsgefäss für Temperaturen auch über dem Siedepunkt.**

(57) Der stehende, zylindrische Flüssigkeitswärmespeicher mit aufgesetztem, offenen Ausdehnungsgefäß für verschiedene Temperaturen auch über dem Siedepunkt ist durch einen oder mehrere wärmegedämmte Zwischenböden (3) in der Höhe in Einzelspeicher (2, 1a, 1b, 1c usw.), die direkt über den wärmegedämmten Zwischenböden (3) und der Sohle des Gesamtbehälters über eine oder mehrere Druckausgleichleitungen (14) miteinander verbunden sind, unterteilt.

In jedem der Einzelspeicher kann nach dem Verdrängungsprinzip von oben nach unten Heißwasser auch über dem Siedepunkt zugeführt werden, dessen Temperatur einem Dampfdruck entsprechen darf, der lediglich niedriger sein muß als der Druck der darüber liegenden Gesamtwassersäule.

Aus technischen und aus Zweckmäßigkeits-Gründen lassen sich auch größere Behälter nur noch aus Spannbeton herstellen.

Da der Spannbeton nicht in der Lage ist, größere Temperaturdifferenzen aufzunehmen, wird zwischen dem eigentlichen Wasserbehälter und dem Spannbehälter ein belüfteter Zwischenraum geschaffen und der Abstand durch pilzartige Stahlbetonkonstruktionen überbrückt.

Die eigentliche wasserdichte Innenhülle besteht aus Blech und ist so konstruiert, daß die auftretenden, großen Temperaturdifferenzen im Bereich zulässiger Blechspannungen aufgenommen werden können.

Beschreibung

Die Erfindung betrifft einen:

> stehenden, zylindrischen Flüssigkeitswärme-
> speicher mit aufgesetztem, offenen Ausdeh-
> nungsgefäß für Temperaturen auch über dem
> Siedepunkt.

Da die Wärmeerzeugung für größere Versorgungsgebiete vornehmlich in Form von Fernheizungen nur mit Nutzung der Kondensationsabwärme, oder Abgasabwärme von Dampfkraftwerken und Gasturbinenanlagen sinnvoll ist, bei denen allerdings im allgemeinen die Erzeugung von elektrischer Energie und der damit verbundenen Wärmeabgabe mit dem Wärmebedarf des Versorgungsgebietes eigentlich nicht ganz übereinstimmt, werden zweckmäßige Wärmespeicher benötigt, in denen die Wärme in Form einer erwärmten Flüssigkeit, normal Wasser, während der Zeit der Stromerzeugung aufgespeichert wird und je nach Bedarf anschließend an das Versorgungsgebiet abgegeben werden kann.

Es sind aus ökologischer Sicht weiterhin Bestrebungen im Gange, die im Sommer anfallende, nicht benötigte Abwärme ebenfalls zu speichern und diese im Winter den Verbrauchern zuzuführen.

Betrachtet man nur die Wirtschaftlichkeit der Stromerzeugung, so sollte die Abwärmenutzung bei einer möglichst tiefen Temperatur, also möglichst unter dem Siedepunkt erfolgen. Schließt man jedoch die Wirtschaftlichkeit der Wärmeversorgung in die Gesamtbetrachtungen mit ein, so hat sich bisher herausgestellt, daß die Wärme für Fernheizungszwecke mit Temperaturen, die auf jeden Fall über dem Siedepunkt zwischen 110°C und etwa 150°C liegen, im Winter abgegeben werden muß. Um Wasser in diesem Temperaturbereich speichern zu können, müssen bisher Druckspeicher mit verhältnismäßig hohen Drücken, verbunden mit hohen Aufwendungen und hohen Anschaffungskosten, verwendet werden.

Seit geraumer Zeit ist allgemein bekannt, daß die Speicherung in drucklosen, stehenden, zylindrischen Gefäßen, entsprechend den Tankbehältern für Mineralöl, preisgünstiger ist.

Die Wärmespeicherkapazität eines solchen Behälters ist allerdings durch den Flüssigkeitsinhalt, den Siedepunkt der Flüssigkeit (bei Wasser im allgemeinen ca. 90°C) und der Rücklauftemperatur des von der Heizung zurückströmenden Wassers, die auch nicht ganz beliebig nach unten abgesenkt werden kann, begrenzt.

Neuerdings ist der sogenannte Erdspeicher im Gespräch, wo man die Wärme in riesigen künstlichen Seen speichern will. Der Bau dieser verhältnismäßig preisgünstigen Speicher stößt wegen der Abdichtung gegen den Untergrund, oder wenn dies nicht geschieht, wegen des Eintritts von heißem Wasser in den Untergrund, ebenfalls auf erhebliche Schwierigkeiten.

Weiterhin wird in der letzten Zeit der Flachspeicher propagiert, dessen Kosten zwar gering erscheinen, dessen Ausführung jedoch keiner Berechnung standhält.

Diese Speicher haben allerdings alle noch den zusätzlichen Nachteil, daß das Wasser nicht mit der gewünschten wirtschaftlichen Temperatur gespeichert werden kann.

Für die Wärmedehnung der Flüssigkeit als Wärmeträger wird zusätzlich Raum benötigt. Zur Zeit wird dieser Raum im allgemeinen durch Zusatzbehälter geschaffen, bei denen das Wasser entweder unter einem Dampfpolster (1,5 bar) steht, oder wo der freie Raum mit Stickstoffgas ausgefüllt ist. Dehnt sich das Wasser im Leitungsnetz aus, so fließt das überschüssige Wasser in diese Ausdehnungsbehälter. Fällt der Druck im Leitungsnetz durch Temperatursenkung, so fördern extra vorgesehene Diktierpumpen das erforderliche Wasser in das Leitungsnetz, um den Druck in demselben zu erhalten.

- 3 -  0037847

Ist der freie Raum mit Stickstoff ausgefüllt, so geht bei jedem Füllvorgang des Ausdehnungsbehälters mit Flüssigkeit die Stickstofffüllung verloren und muß beim Entleeren der Flüssigkeit wieder ersetzt werden.

Diese Nachteile:

- Begrenzung der Temperatur nach oben,
- umständliche Wasserspiegelhaltung im Speicher und
- umständliche sowie auch unwirtschaftliche Druckhaltung sowie
- zu geringe Speicherkapazität je $m^3$ Wasser

soll die Erfindung:

STEHENDER, ZYLINDRISCHER FLÜSSIGKEITS-
WÄRMESPEICHER MIT AUFGESETZTEM, OFFE-
NEN AUSDEHNUNGSGEFÄß FÜR TEMPERATUREN
AUCH ÜBER DEM SIEDEPUNKT

beseitigen.

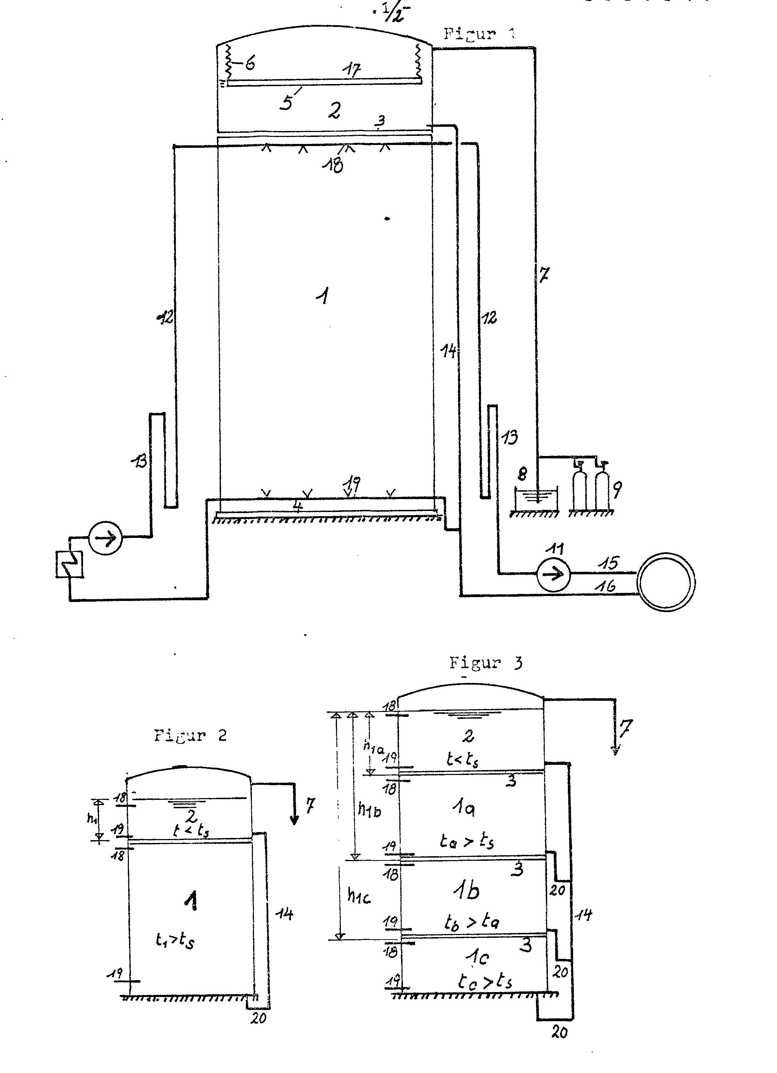

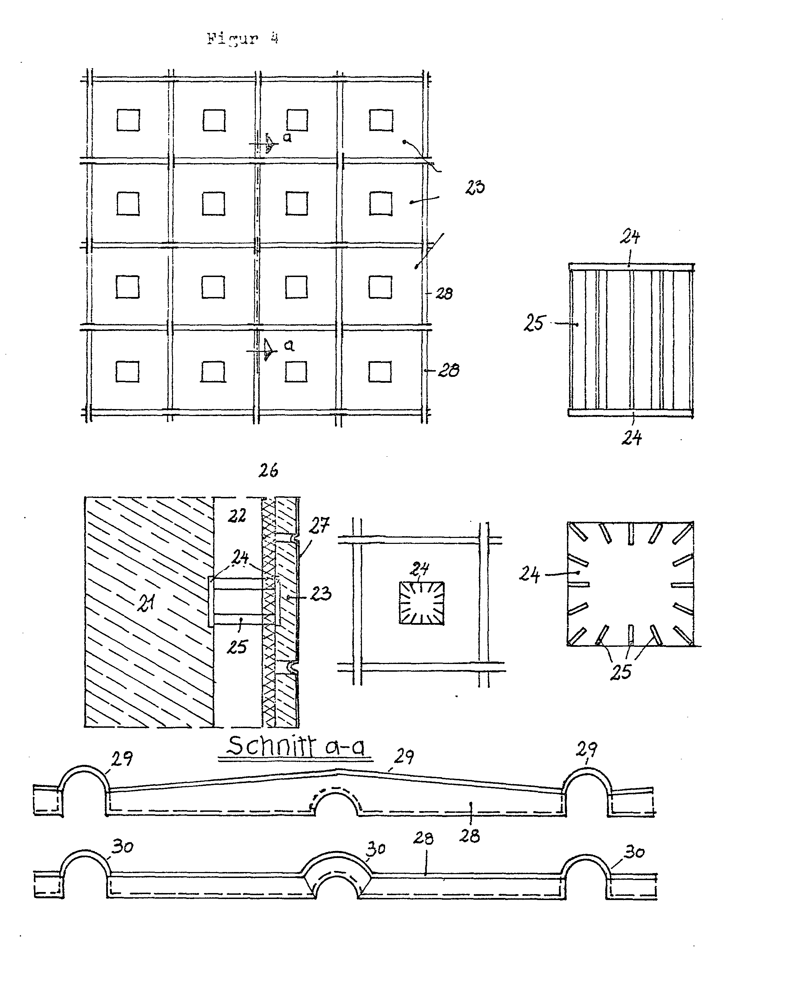

Grundlage für die Erfindung ist der möglichst hohe, stehende, aus Zweckmäßigkeitsgründen zylindrische Tankbehälter mit oder ohne Dach, dessen unterer Raum des Flüssigkeitswärmespeichers (1) vom oberen Raum des Ausdehnungsgefäßes (2) durch einen wärmegedämmten Zwischenboden (3) getrennt ist (Figur 1).

Der Speicher (1) ist dicht über dem Boden mit dem Ausdehnungsgefäß (2) dicht über dem wärmegedämmten Zwischenboden (3) mittels einer Druckausgleichleitung (14) verbunden. Die Druckausgleichleitung (14) bewirkt, daß in dem Ausdehnungsgefäß (2) und in dem Flüssigkeitswärmespeicher (1) die Flüssigkeitsdrücke sich so verhalten, wie wenn der wärmegedämmte Zwischenboden nicht vorhanden wäre.

- 4 -          0037847

Das gleiche gilt auch, wenn mehrere wärmegedämmte Zwischenböden (Figur 3, 3a, 3b, 3c usw.) vorhanden sind, wo jeweils die Speicherräume (1a, 1b, 1c usw.) direkt über den wärmegedämmten Zwischenböden (3) durch eine Druckausgleichleitung (14) miteinander verbunden sind.
Der Speicherraum (Figur 1, 1) bzw. die Speicherräume (Figur 3, 1a, 1b, 1c usw.) stehen dann jeweils unter dem Wasserdruck der darüber stehenden Wassersäule bis zum obersten Wasserspiegel und jeder der Speicherräume (1 oder 1a, 1b, 1c usw.) kann nach dem Verdrängungsprinzip je von oben mit heißem Wasser gefüllt werden, dessen Temperatur einem Dampfdruck entspricht, der etwas niedriger sein muß als der Druck der darüber stehenden Wassersäule von Oberkante des betreffenden Speicherraumes bis zum obersten Wasserspiegel.

Es ist außerdem noch möglich, das Ausdehnungsgefäß (2) als Speicher für Wasser mit Temperaturen bis zum Siedepunkt zu nutzen.

Um den Eintritt von Sauerstoff in das Ausdehnungsgefäß (2) zu unterbinden, schwimmt auf dem Flüssigkeitsspiegel im Ausdehnungsgefäß (2) ein zweckmäßigerweise kreisrundes Schwimmdach (5) wie sie von Bezintanks bekannt sind, deren äußerer Rand mit dem oberen Rand des Ausdehnungsgefäßes (2) bzw. mit dem Dach, wenn ein solches vorhanden ist, über einen Faltenbalg (6), oder eine gleichwertige Konstruktion, die in der Lage ist, sich vom oberen Rand des Behälters bis zu dem isolierten Zwischenboden (5) zu verlängern, oder zu verkürzen, verbunden ist.

Der Zwischenraum zwischen dem Faltenbalg (6) und dem Mantel des Ausdehnungsgefäßes (2) ist über die Überlaufleitung (7) mittels eines Inertgases, vornehmlich Stickstoff, gefüllt. Damit das Stickstoffgas aus Gasflaschen (9) über die Überlaufleitung (7) eingefüllt, nicht entweicht, endet die Überlaufleitung (7) syphonartig in einer Flüssigkeitstasse (8).

Bei steigendem Flüssigkeitsspiegel des Ausdehnungsgefäßes tritt der verdrängte Stickstoff aus dem Zwischenraum zwischen Faltenbalg (6) und dem Ausdehnungsgefäßmantel in einen Raum, der zwischen dem Schwimmdach (5) und einer darüber befindlichen Membrane (17) gebildet wird.

Dieser zusätzliche Raum kann auch durch eine andere Konstruktion, elastische Blase, Luftsack o.ä. gebildet werden. Auf diese Weise kann der laufende Inertgasbedarf in geringen Grenzen gehalten werden.

Da es kaum eine Isolierung gibt, die auch hohe Drücke aushält, ist als Bodenisolierung (4) gegen den Boden ein Flüssigkeitspolster durch die höhere Lage des Kaltflüssigkeitsverteilers (19) vorgesehen. Die Zuführung der kalten Flüssigkeit beim Entladen erfolgt über die Speicherentladepumpe (10), beim Beladen mit der Beladepumpe (11) über die gemeinsame Kaltflüssigkeitsverteilerleitung (18), wenn der Speicher im Nebenschluß an das Netz angeschlossen ist.

Um im allgemeinen Versorgungsnetz der Heizungsanlage beim Vorlauf (15) noch höhere Temperaturen vorsehen zu können, wie es mit Winterspitzenkesseln der Fall sein wird, ist in der Be- und Entladeleitung (12) eine Sicherheitschleife (13) vorgesehen. Um die übereinander angeordneten Speicher (Figur 3, 1a, 1b, 1c usw.) möglichst voll aufladen zu können, ist in der Druckausgleichleitung (14) am Boden jeweils eine Schleife (20) nach unten vorgesehen, die aufgrund ihrer Länge eine Wärmedämmung bewirken soll, damit der jeweilige Speicher bis herunter zum wärmegedämmten Zwischenboden (3) genutzt werden kann.

Der wärmegedämmte Zwischenboden (3 bzw. 3a, 3b, 3c usw.) besteht aus konstruktiven Gründen, wegen der unterschiedlichen Wärmedehnungen, aus dem Deckel des Flüssigkeitswärmespeichers (1) mit dem dazugehörigen Gespärre, was

- 6 -                    0037847

zweckmäßig oberhalb angeordnet ist, berechnet für das Eigengewicht mit einer gewissen Montagelast während der Montage und verhältnismäßig geringem Flüssigkeitsdruck wie er beim Be- und Entladen des Speichers zufolge Trägheit der Flüssigkeit auftreten kann, der darüber befindlichen Wärmedämmung und dem Boden des Ausdehnungsgefäßses, das ebenfalls mit einem Gespärre versehen ist. Boden und Deckel sind in der Mitte zentriert und können nach außen gleiten, oder auf Rollen zwischen beiden Gespärren unterschiedlichen Wärmedehnungen folgen.

Da der Wasserdruck über den wärmegedämmten Zwischenböden (3) auf jeden Fall niedriger ist als am Boden des Gesamtspeichers (1) kann auch vielleicht auf diese komplizierte und aufwendige Konstruktion verzichtet werden und statt einer Wärmedämmung aus weichen Dämmstoffen eine wärmedämmende Steinart, oder Schaumglas (Foamglas) gewählt werden, die den auftretenden Wasserdruck aufnehmen können. Durch einen verhältnismäßig dünnen Boden ohne Spanten kann der Flüssigkeitsraum des Ausdehnungsgefäßes (2) gegenüber der Wärmedämmung abgedichtet werden.

In diesem Fall erfolgt eine Direktübertragung des Wasserdruckes über den wärmegedämmten Zwischenboden (3) von dem Ausdehnungsgefäß (2) zum Flüssigkeitswärmespeicher (1). In der gleichen Weise geschieht dies auch über die wärmegedämmten Zwischenböden (3a, 3b, 3c usw.) zwischen den einzelnen Speichern.

Aus schweißtechnischen Gründen läßt sich die Wandstärke von Metallbehältern, vornehmlich Stahl, nicht beliebig stark ausführen. Außerdem wären sehr dicke Wandstärken in Stahl unwirtschaftlich. Aus diesem Grunde werden größere Behälter in Spannbeton hergestellt. Wegen der geringen Wärmeleitfähigkeit, der geringen zulässigen Spannungen und der verhältnismäßig großen Wandstärken gegenüber dem Stahl, ist der Spannbeton nicht in der Lage, Spannungen aus Wärmedifferenzen wie sie bei einem Wärmespeicher auftreten, aufzunehmen.

Es muß vielmehr darauf geachtet werden, daß auf den Spannbetonmantel, sowohl von außen, nach innen wie in der Höhe, möglichst keine, oder nur geringe Wärmedifferenzen auftreten.

Um dieses Ziel zu erreichen, wird zwischen dem eigentlichen Speicher und dem Spannbetonmantel ein Belüftungsraum vorgesehen, der mittels natürlichem Auftrieb, oder mit Hilfe eines Gebläses künstlich belüftet wird.

Der eigentliche Speicher wird durch eine Blechhaut gebildet, die über pilzartige Konstruktionen gegenüber dem Spannbetonmantel abgestützt ist.

Die pilzartigen Konstruktionen bestehen aus den etwa quadratischen Stahlbetonplatten, die den Pilzkopf (23) bilden, auf denen sich die Blechhaut (27) des Speichers mit dem Wasserdruck abstützt und den Pilzfüßen (24), die die Belastung über den Belüftungsraum hinweg in den Spannbetonmantel (21) übertragen.

Ob die Pilzköpfe (23) auf der Unterseite (Außenseite) eine zusätzliche Wärmedämmung (26) erhalten, richtet sich nach der Wärmeberechnung für die Belüftung des Zwischenraumes.

Die Pilzköpfe (23) in Stahlbeton sind durch Dehnungsfugen voneinander getrennt und sind in ihrer Beanspruchung durch den Flüssigkeitsdruck praktisch statisch bestimmte Konstruktionsteile, die jede für sich Wärmedehnungen in allen Richtungen zulassen.

Sie haben auf der Innenseite des zylindrischen Flüssigkeitswärmespeichers durch die Dehnungsfugen eine Rasteraufteilung (Innenhüllenansicht). Ähnliches gilt für die Pilzköpfe auf dem Boden des Flüssigkeitsspeichers. Hier bildet sich allerdings ein Muster, das durch die als Kreise angeordneten und radial gerichteter Trennungsfugen in etwa gleiche Größen aufgeteilt ist. Die eigentliche Abdichtung des Flüssigkeitsbehälters erfolgt durch die Innenhülle, bestehend aus Blechplatten (27) von der Grösse der Pilzköpfe (23), die auf den Pilzköpfen (23) aufliegen.

0037847

An den Dehnungsfugen, die breit genug sein müssen, sind die Blechplatten mit einem Kompensationsprofil (28) in Form eines Halbkreises, oder U miteinander verbunden. Auf diese Weise ist, mit Ausnahme der Rücken der U-förmigen Kompensatorprofile, die Dehnungsmöglichkeit der Innenhülle in zwei Richtungen gewährleistet.

Um über die durchgehenden Rücken der Kompensationsprofile (28) an den Kreuzungsstellen ebenfalls eine Dehnungsmöglichkeit zu haben, laufen die U-förmigen Kompensatoren (28) horizontal und vertikal jeweils um ein Pilzkopf (23) versetzt über zwei Pilzköpfe (23) hinweg. Die über 2 Felder reichenden, U-förmigen Kompensationsprofile (28) haben in der Mitte, wo sie mit den Enden der senkrecht dazu angeordneten U-förmigen Kompensationsprofile (28) verbunden sind, jeweils die doppelte Höhe (29) wie an den Enden, oder sind hier mit der Außenschale eines Rohrviertelbogens von ca. 90° (30) miteinander verbunden.

Auf diese Weise ist eine gleichmäßige Dehnung in zwei Richtungen, auch in Längsrichtung der Kompensatorprofile (28), gewährleistet, wobei, ausgelöst durch die Dehnung einer jeden Platte, gleichzeitig eine Drehung erfolgt, die auf den Pilzfuß (24) eine Torsionsbeanspruchung ausübt. Diese wird durch den Pilzfuß (24), der einem Kreis, einem Quadrat, oder Rechteck ähnelt, bestehend aus radial angeordneten Flachstahlstäben (25), aufgenommen, die bedingt durch den geringen Torsionswiderstand in der Lage sind, die durch die Drehung hervorgerufenen Spannungen zusätzlich zu den Druckspannungen zu übernehmen.

Anspruch

1. Stehender, zylindrischer Flüssigkeitswärmespeicher mit aufgesetztem, offenen Ausdehnungsgefäß für verschiedene Temperaturen unter und auch über dem Siedepunkt. Dadurch gekennzeichnet, daß er durch einen oder mehrere wärmegedämmte Zwischenböden (3) in der Höhe unterteilt ist und daß die untersten Stellen der so geschaffenen Speicherräume (2, 1a, 1b, 1c usw.) über eine oder mehrere genügend große Druckausgleichleitungen (14) miteinander verbunden sind, welche bewirken, daß die statischen Druckverhältnisse in den einzelnen Speicherräumen sich so zueinander verhalten, wie wenn die wärmegedämmten Zwischenböden (3) nicht vorhanden wären, aber in jedem der so geschaffenen Speicherräume (2, 1a, 1b, 1c usw.) zuläßt Energie in Form von Flüssigkeit (normal Wasser) mit Temperaturen über dem Siedepunkt nach dem Verdrängungsprinzip zu speichern, bei der lediglich der Dampfdruck niedriger sein muß als der Druck durch die Gesamtflüssigkeitssäule, die auf dem jeweiligen Speicher ruht, wobei das Ausdehnungsgefäß (2) auch als Wärmespeicher für Temperaturen bis zum Siedepunkt genutzt werden kann.

2. Stehender, zylindrischer Flüssigkeitswärmespeicher mit aufgesetztem, offenen Ausdehnungsgefäß für verschiedene Temperaturen unter und auch über dem Siedepunkt. Dadurch gekennzeichnet, daß die Anschlüsse der Druckausgleichleitungen (14) an den jeweiligen Speicher nach Anspruch 1 zunächst mit einer Schleife (20), die eine Wärmedämmung bewirken soll und außerdem eine bessere Ausnutzung des jeweiligen Speichers, nach unten geführt sind.

3. Stehender, zylindrischer Flüssigkeitswärmespeicher mit aufgesetztem, offenen Ausdehnungsgefäß für verschiedene Temperaturen unter und auch über dem Siedepunkt.

Dadurch gekennzeichnet, daß die Druckausgleichleitung (14) bei Nichtvorhandensein einer Bodenwärmedämmschicht in einem gewissen Abstand über dem Boden an den untersten Speicher angeschlossen ist, damit das darunter befindliche Wasserpolster als Wärmedämmschicht wirkt.

4. Stehender, zylindrischer Flüssigkeitswärmespeicher mit aufgesetztem, offenen Ausdehnungsgefäß für verschiedene Temperaturen unter und auch über dem Siedepunkt. Dadurch gekennzeichnet, daß das Ausdehnungsgefäß (2) ein Dampfpolster haben darf, das dem Dampfdruck der Flüssigkeitstemperatur im Ausdehnungsgefäß entspricht.

5. Stehender, zylindrischer Flüssigkeitswärmespeicher mit aufgesetztem, offenen Ausdehnungsgefäß für verschiedene Temperaturen unter und auch über dem Siedepunkt. Dadurch gekennzeichnet, daß das Ausdehnungsgefäß (2) ein Schwimmdach (17) hat wie bei Benzinbehältern und daß der äußere Rand des Schwimmdaches, oder Schwimmplatte (17) über einen Faltenbalg (6), oder gleichwertige Konstruktion, mit dem oberen Rand des Zylindermantels verbunden ist und der zwischen dem Faltenbalg (6) und dem Außenmantel gebildete Raum über die Überlaufleitung (7) in einem Syphon (8) endet, so daß dieser Raum, um das Wasser gegen den Sauerstoff der Luft abzuschließen, mit Stickstoff gefüllt werden kann. Das jeweils beim Steigen des Schwimmdaches entweichende Stickstoffgas wird in dem Zwischenraum zwischen dem Schwimmdach (5) und einer Membrane (17) aufgefangen. Dieser Zwischenraum kann auch durch einen elastischen Sack o.ä. Konstruktion gebildet sein.

6. Stehender, zylindrischer Flüssigkeitswärmespeicher mit aufgesetztem, offenen Ausdehnungsgefäß für verschiedene Temperaturen unter und auch über dem Siedepunkt.

- 3 -                    0037847

Dadurch gekennzeichnet, daß die warmen Be- und Entladeleitungen (12) über eine Sicherheitsschleife (13)
an der Wasserverteilerleitung des Heizungsnetzes angeschlossen sind.

7. Stehender, zylindrischer Flüssigkeitswärmespeicher mit
aufgesetztem, offenen Ausdehnungsgefäß für verschiedene
Temperaturen unter und auch über dem Siedepunkt.
Dadurch gekennzeichnet, daß das Ausdehnungsgefäß (2)
nicht auf, sondern auch neben dem Wärmespeicher (1) angeordnet ist.

8. Stehender, zylindrischer Flüssigkeitswärmespeicher mit
aufgesetztem, offenen Ausdehnungsgefäß für verschiedene
Temperaturen unter und auch über dem Siedepunkt aus
Spannbeton.
Dadurch gekennzeichnet, daß eine Innenhülle (27) aus
Stahl, die auf etwa quadratischen Pilzköpfen (23) ruht,
die eigentliche Dichtung bildet, die sich über einen
belüfteten Zwischenraum mittels Pilzfüßen (24) gegen
den Spannbetonzylindermantel (21) und gegen den Betonboden abstützen und zur Aufnahme der Wärmedehnung in
den rastermäßig angeordneten Fugen zwischen den Pilzköpfen (23) Kompensationsbleche (28), etwa mit einem
Halbkreis-, oder U-Profil, besitzt, die in der Höhe und
im Umfang versetzt je über 2 Pilzköpfe (23) reichen und
damit die Dehnung in beiden Richtungen möglich ist, in
der Mitte etwa doppelte Höhe (29) besitzen, oder über
die Außenschale eines Viertelbogens (30), ca. 90$^{o}$ verbunden sind, wo sich die Enden der rechtwinklig dazu
angeordneten Kompensationsbleche treffen.

9. Stehender, zylindrischer Flüssigkeitswärmespeicher mit
aufgesetztem, offenen Ausdehnungsgefäß für verschiedene
Temperaturen unter und auch über dem Siedepunkt in
Spannbeton.

0037847

Dadurch gekennzeichnet, daß die Hülle (27) unter Anspruch 6 auf den etwa quadratischen Pilzköpfen (23) ruht, die über Pilzfüßen (24), bestehend aus Flachstählen (25), die auf einem Kreis, oder einem Rechteck angeordnet sind und mit ihrer flachen Seite zu dessen Mittelpunkt zeigen, um eine Drehung der Pilzköpfe (23), die zur Aufnahme der Wärmedehnungen zusätzlich erforderlich ist, zu ermöglichen.

Figur 1

Figur 2

Figur 3

Figur 4

Schnitt a-a